# EUROPÄISCHE PATENTANMELDUNG

(11) **EP 4 651 498 A1**
(43) Veröffentlichungstag der Anmeldung: **19.11.2025**
(21) Anmeldenummer: 24175505.7
(22) Anmeldetag: 13.05.2024
(51) Int. Cl.: H04N 21/233, H04N 21/234, H04N 21/2343, H04N 21/242, H04N 21/266, H04N 21/43, H04N 21/439, H04N 21/44, H04N 21/4402, H04N 21/488, H04N 21/84

(54) **TECHNIKEN ZUM DYNAMISCHEN BEREITSTELLEN VON ZUSATZINFORMATIONEN BEI EINER MEDIENWIEDERGABE**

(71) Anmelder: Deutsche Telekom AG, 53113 Bonn (DE)
(72) Erfinder: JAHN, Carl, Wiesbaden (DE); FLADDA, Oliver, Mühltal (DE); SCHMITT, Kai Volker, Gernsheim (DE); SPLAWSKI, Alexander, Roßdorf (DE); SCHREER, Kim-Stephanie, Bickenbach (DE); SCHERER, Claudia, Riedstadt (DE); BEYKIRCH, Christina, Bonn (DE)
(74) Vertreter: Braun-Dullaeus Pannen Emmerling Patent- & Rechtsanwaltspartnerschaft mbB

(57) **Zusammenfassung**

Die vorliegende Erfindung betrifft Techniken zum dynamischen Bereitstellen von Zusatzinformationen bei einer Medienwiedergabe umfassend die folgenden Schritte:
• Empfangen eines ursprünglichen Datenstroms einer Medienwiedergabe, wobei die Medienwiedergabe eine ursprüngliche Videospur und/oder eine ursprüngliche Tonspur umfasst;
• Übergabe des Datenstroms an eine Prozessoreinheit, wobei ein Zusatzinformationserzeugungs-Algorithmus implementiert auf der Prozessoreinheit folgende Schritte in Kombination oder Einzeln ausführt:
∘ Hinsichtlich der Tonspur: Umwandeln der Sprache des Audiosignals der Tonspur in eine Basis-Textausgabe und Erzeugen von Tonspur-Zusatzinformationen basierend auf der Basis-Textausgabe und/oder dem Audiosignal;
und/oder
∘ Hinsichtlich der Videospur: Durchführen einer Mustererkennung von Bildern, wodurch Objekte und/oder Objektbewegungen aus den Bildern erkannt und deren Wortbeschreibung extrahiert werden, wobei die Objekte und/oder Objektbewegungen als Input an eine generative KI übergeben werden mit der Aufgabe Videospur-Zusatzinformationen zu erzeugen;
∘ Erstellen eines angereicherten Datenstroms der Medienwiedergabe, wobei der angereicherte Datenstrom die Tonspur-Zusatzinformationen und/oder der Videospur-Zusatzinformationen umfasst, wobei der angereicherte Datenstrom auf einem Endgerät eines Nutzers darstellbar ist.

## Beschreibung

Die vorliegende Erfindung betrifft Techniken zum dynamischen Bereitstellen von Zusatzinformationen bei einer Medienwiedergabe.

In der EU wurde kürzlich der sogenannte "Accessibility Act" erlassen. Dieser ist ein verpflichtendes und wegweisendes Gesetz der Europäischen Union, dass festlegt, wie Produkte bzw. Medien und Dienstleistungen für Menschen mit Einschränkungen oder Behinderungen besser zugänglich gemacht werden können.

Fast 90 Millionen Menschen in Europa leben mit einer Form einer Einschränkung oder Behinderung, darunter auch viele ältere Menschen, welche in Zukunft von den Folgen dieses Gesetzes profitieren können.

Ziel dieses Gesetzes ist es also, Menschen einen leichteren Zugang zu (lebensnotwendigen) Leistungen zu ermöglichen, sei es betreffend öffentlicher Verkehrsmittel, Bankdienstleistungen, Zugang zum Internet, TV Angebote und vieler weiterer Dienstleistungen und Services. Es ist zu erwarten, dass sowohl Unternehmen als auch die betroffenen Menschen von diesem Vorhaben profitieren, da dieses Gesetz eine Standardisierung in vielen Bereichen innerhalb der EU erleichtern wird und eventuell einen Innovationsschub bezüglich der Techniken, die diesen Services zu Grunde liegen, auslösen kann.

Unternehmen, die Produkte oder Services anbieten, die unter den Geltungsbereich dieses Gesetzes fallen, müssen bis zum Jahr 2025 sicherstellen, dass das Gesetz entsprechend umgesetzt wird. Im Fokus stehen hierbei auch digitale Technologien und Medien, die eine Nutzung mithilfe von audiovisuellen Funktionen voraussetzen.

Im Bereich von Videowiedergaben ist beispielsweise bekannt, dass Untertitel eingesetzt werden können, um Menschen mit einer Hörbehinderung ein Video zugänglich zu machen und/oder dass zusätzlich zur normalen Tonspur von einem (zusätzlichen) Sprecher weitere Informationen hinzugefügt werden (wie etwa "die Polizisten gehen zum Auto"), damit auch Personen mit einer Sehbehinderung ein besseres "Erlebnis" beim Abspielen des Videos haben.

Jedoch müssen die Untertitel und/oder die Audiodeskription schon im Vorfeld erzeugt und den entsprechenden Videodaten hinzugefügt werden, sodass ein Nutzer beispielsweise auswählen kann ob er die Untertitel aktivieren möchte oder nicht.

Besonders für Medienangebote in Echtzeit, wie beispielsweise Live-Sport-Ereignisse, sind diese aus dem bekannten Stand der Technik gebräuchlichen Methoden allerdings nicht geeignet. Zudem ergeben verschiedene Studien, dass die bloße 1:1 Wiedergabe des gesprochenen Wortes in Form von Untertitel oft nur ein unzureichendes Nutzererlebnis bieten kann.

Bei den herkömmlichen Untertiteln für Filme wird zudem der Detailgrad bemängelt. Wird Musik im Hintergrund einer Szene abgespielt, erscheint als Untertitel meistens nur eine grobe Bezeichnung der Kategorie der Musik zum Beispiel "Uplift-Musik wird wiedergegeben".

Es ist demnach die Aufgabe der Erfindung Techniken bereitzustellen, die quasi-Echtzeit Zusatzinformationen, insbesondere Untertitel und/oder Zusatz-Audio-Inhalte, für eine Medienwiedergabe erzeugen.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Gemäß einem ersten Aspekt der Erfindung ist ein Verfahren zum dynamischen Bereitstellen von Zusatzinformationen bei einer Medienwiedergabe, insbesondere auf einem Endgerät eines Nutzers, angegeben, wobei das Verfahren folgende Schritte umfasst:
- Empfangen eines ursprünglichen Datenstroms einer Medienwiedergabe, wobei die Medienwiedergabe eine ursprüngliche Videospur und/oder eine ursprüngliche Tonspur umfasst;
   ∘ beispielsweise kann ein Videostream eines Films empfangen werden, ein Podcast oder ein Radioprogramm aber auch lediglich Bilder, wie beispielsweise bei einem Stummfilm; vorliegend werden Videospur und Tonspur also getrennt voneinander betrachtet, sodass ein gewöhnlicher Film mit Ton also eine Videospur (umfassend also eine Mehrzahl an Bilder) und eine Tonspur aufweist;
- Übergabe des Datenstroms an eine Prozessoreinheit, wobei ein Zusatzinformationserzeugungs-Algorithmus auf der Prozessoreinheit implementiert ist. Der Zusatzinformationserzeugungs-Algorithmus kann also funktional als Software implementiert sein und zudem eingerichtet sein die Videospur und die Tonspur voneinander zu trennen. Der Zusatzinformationserzeugungs-Algorithmus führt folgende Schritte in Kombination oder Einzeln aus:
   ∘ Hinsichtlich der Tonspur: Umwandeln der Sprache des Audiosignals der Tonspur in eine Basis-Textausgabe und Erzeugen von Tonspur-Zusatzinformationen basierend auf der Basis-Textausgabe und/oder dem Audiosignal;
      ▪ es existieren bekannte Algorithmen, die aus einem Audiosignal der Tonspur Sprache von anderen (Hintergrund-)Geräuschen separieren können und dann, beispielsweise mittels eines ASR Moduls ("artificial speech recognition") die Sprache in die Basis-Textausgabe umwandeln können. Die Basis-Textausgabe kann eine 1:1 Umsetzung der gesprochenen Worte sein und damit Untertiteln entsprechen.
      ▪ Die Tonspur-Zusatzinformationen können in Textform und/oder als Audiosignal erzeugt werden. Die Tonspur-Zusatzinformationen können nun basierend auf der Basis-Textausgabe, anderen Metainformationen und/oder dem Audiosignal zusätzliche "Informationen" erzeugen. Beispielsweise kann der Algorithmus hierzu die Wörter der Basis-Textausgabe an eine generative KI übergeben mit der Aufgabe Information zu erstellen. Als Beispiel: die Basis-Textausgabe enthält den Satz "Am Wochenende findet das Fußball Endspiel der EM in der Hauptstadt von Deutschland statt". An die generative KI kann dann der Satz übergeben werden: "was ist die Hauptstadt von Deutschland?", Wobei die generative AI die Antwort "Berlin" ausgibt. Ein mit Tonspur-Zusatzinformationen angereicherter Untertitel, nachstehend auch als angereicherter Datenstrom bezeichnet, kann dann erstellt werden und beispielsweise wie folgt lauten: "Am Wochenende findet das Fußball Endspiel der EM in Berlin der Hauptstadt von Deutschland statt"; basierend auf dem Audiosignal könne beispielsweise die Tonspur-Zusatzinformationen erzeugt werden: "eine Amsel zwitschert auf einem Baum", wenn das Audiosignal ein entsprechendes Zwitschern einer Amsel umfasst;
      und/oder
   o Hinsichtlich der Videospur: Durchführen einer Mustererkennung von Bildern, wodurch Objekte und/oder Objektbewegungen aus den Bildern erkannt und deren Wortbeschreibung extrahiert werden, wobei die Objekte und/oder Objektbewegungen als Input an eine generative KI übergeben werden mit der Aufgabe Videospur-Zusatzinformationen zu erzeugen;
      ▪ bekannte Mustererkennung Algorithmen, beispielsweise basierend auf einer künstlichen Intelligenz (insbesondere einer Bekannten generativen AI), sind in der Lage Objekte zu identifizieren und in der Wortform auszugeben, was sie erkannt haben. Der generativen KI (beispielsweise ChatGPT 3.5) kann also beispielsweise ein Bild mit der Frage übergeben werden "was kannst du auf dem Bild sehen?" Erkennt die KI beispielsweise auf dem Bild die Begriffe "Katze, Baum und Feuerwehr" können diese Begriffe einer generativen KI übergeben werden mit dem Befehl aus diesen Begriffen eine Geschichte zu erzeugen - was nachstehend illustriert wird. Das Ergebnis ist dann die vorgenannte Videospur-Zusatzinformation, diese kann dann noch in ein Audiosignal umgewandelt werden, damit beispielsweise blinden Menschen auf diese Weise das Bild zugänglich gemacht werden kann. Je mehr Objekte aus einem Bild oder Bildern extrahiert werden, umso genauer kann eine generative KI die bildlichen Geschehnisse in Wörtern wiedergeben; hierbei kann auch eine Gewichtung der einzelnen Objekte dahingehend stattfinden, dass davon ausgegangen werden kann, dass auf Bildern wichtige Inhalte bevorzugt in der Bildmitte dargestellt werden. Bildrandelemente können in einer Ausführungsform ignoriert werden;
      ▪ bei den Videospur-Zusatzinformationen handelt es sich insbesondere um Audiosignale in Form von Sprache, da die Video-Informationen insbesondere Menschen zugänglich gemacht werden sollen, die nicht sehen können. Auf der anderen Seite ermöglichen es die Videospur-Zusatzinformationen den Inhalt eines Videos quasi in Audiosignale umzuwandeln und trotzdem erfahrbar zu machen, wodurch eine enorme Datenreduktion erzielt werden kann, wenn beispielsweise anstatt des gesamten Videos nur noch die Audiosignale an ein Endgerät eines Nutzers übermittelt werden, dies ist beispielsweise möglich, wenn das Verfahren in einer Cloud-Umgebung (insbesondere eines Streaminganbieters) durchgeführt wird;
   o Erstellen eines angereicherten Datenstroms der Medienwiedergabe, wobei der angereicherte Datenstrom die Tonspur-Zusatzinformationen und/oder die Videospur-Zusatzinformationen umfasst, wobei der angereicherte Datenstrom auf einem Endgerät eines Nutzers darstellbar ist.
      ▪ Hierdurch wird also ein Datenstrom bereitgestellt der Informationen einer Sinneswahrnehmung in Informationen einer anderen Sinneswahrnehmung umwandelt, sodass die Inhalte der entsprechenden Medienwiedergabe beispielsweise Personen zugänglich gemacht werden können, die eine Einschränkung aufweisen. Zudem ist es möglich, wie schon vorstehend angedeutet, eine Datenreduktion zu erzielen, da beispielsweise ein bildlicher Inhalt, dessen Übertragung eine große Datenmenge erfordert, in Audiosignale, insbesondere sprachlichen Inhalt, umgewandelt wird. Internet-Videos können beispielsweise auf diese Art und Weise in Sprache übersetzt werden;
      ▪ Insbesondere können die Tonspur-Zusatzinformationen und/oder die Videospur-Zusatzinformationen in den ursprünglichen Datenstrom eingefügt werden, sodass sich ein mit Zusatzinformationen angereicherter Datenstrom ergibt. Der Datenstrom kann allerdings auch neu erstellt werden und beispielsweise nur Sprache aufweisen.
      ▪ Ein möglicher Anwendungsfall ist beispielsweise, dass der ursprüngliche Datenstrom ein Podcast ist in dem beispielsweise berichtet wird, wie man am besten von Hamburg nach München reist. Eine Wiedergabe-App, der eine künstliche Intelligenz zu Grunde liegt, kann an geeigneter Stelle die Tonspur-Zusatzinformation einbringen "Möchten Sie einen Zug buchen um mit der Bahn von München nach Hamburg zu reisen?" und dadurch ein interaktives Menü starten, welches es beispielsweise sehbehinderten Menschen erleichtert eine solche Reise zu buchen.

In einer Ausführungsform wird zur Erzeugung der Tonspur-Zusatzinformationen die Basis-Textausgabe einer generativen KI übergeben mit der Aufgabenstellung Zusatzinformationen zu erzeugen.

Die Basis-Textausgabe kann eine 1:1 Wiedergabe des gesprochenen Wortes sein und damit den klassischen "Untertiteln" entsprechen. Diese klassischen Untertitel können von der generativen Al genutzt werden, um die Tonspur-Zusatzinformationen zu erzeugen.

Der Nutzer kann beispielsweise in einem Vorabmenü einer App seines Endgeräts spezifizieren oder interaktiv eingeben, welche Zusatz-Informationen von der KI erfragt werden sollen. Insbesondere können dadurch also die Aufgabenstellung der Kl definiert werden. Beispielsweise kann man auf diese Art und Weise festlegen, ob beispielsweise über Einkaufsmöglichkeiten, Reiseverbindungen, Detailinformationen etc. informiert werden soll. Der Nutzer ist zudem in der Lage zu spezifizieren, welchen Detailgrad an Zusatzinformationen erwünscht.

In einer Ausführungsform umfasst die Prozessoreinheit einen Prioritätsunterscheidungs-Algorithmus, wobei der Prioritätsunterscheidungs-Algorithmus Audioelementen des Audiosignals der Tonspur zumindest zwei verschiedene Prioritäten zuordnet. Dies ist dahingehend zu verstehen, dass ein Audiosignal aus Überlagerungen von verschiedenen Audioelementen umfassen kann. Ein Audioelement kann beispielsweise ein Satz sein, den eine Person A sagt und ein zweites Audioelement ein Satz den eine Person B sagt. Diese Audioelemente können überlagert sein und beispielsweise durch den Prioritätsunterscheidungs-Algorithmus voneinander getrennt werden.

Dies bietet den Vorteil, dass bestimmt werden kann, ab welcher Priorität eines Audioelements Zusatzinformationen erstellt werden sollen. Es kann zudem spezifiziert werden, ob für verschiedene Prioritäten verschiedene Detailtiefen an Zusatzelementen generiert werden.

In einer bevorzugten Ausgestaltung trifft der Prioritätsunterscheidungs-Algorithmus auf Grundlage der folgenden Kriterien diese Zuordnung:
- Übereinstimmung des Audioelements mit Sprache,
   ∘ hierdurch wird beispielsweise ermöglicht, dass Sprache von Geräuschen unterschieden werden kann. In der Regel werden Audioelementen, die Sprache entsprechen, eine höhere Priorität zugeordnet;
- Lautstärke des Audioelements, und/oder
   ∘ hierdurch wird beispielsweise ermöglicht, dass das Gespräch eines Hauptdarstellers eines Films von einem Gespräch in einem Hintergrund zwischen anderen Personen unterschieden werden kann;
- Frequenzeigenschaften des Audioelements.
   ∘ Vor allem Naturgeräusche oder auch Sprache weisen typische Frequenzeigenschaften aus, die genutzt werden können, um Unterscheidungen vorzunehmen. Beispielsweise kann gezielt festgestellt werden, ob ein Vogelgezwitscher zu hören ist, und dies der Kl mit der Aufgabenstellung übergeben werden, herauszufinden, um welche Vogelart es sich handelt.

In einer Ausführungsform wird die Erstellung der Tonspur-Zusatzinformationen in Abhängigkeit von der Priorität durchgeführt.

Dies ermöglicht es, die Zusatzinformationen zielgerichtet auf die Bedürfnisse des Nutzers anzupassen.

In einer Ausführungsform werden externe Datenbanken zur Erstellung der Zusatzinformationen angefragt.

Bei diesen externen Datenbanken, kann es sich, wie schon vorstehend erläutert um die generative KI handeln, der in aller Regel durch die entsprechenden Trainingsprozesse Datenbankinformationen zu Grunde liegen. Es kann aber auch eine Schnittstelle zu Spezialdatenbanken, Behörden und/oder Verkehrsunternehmen bereitgestellt werden, um gezielt Informationen Anfragen zu können wie beispielsweise "wann der nächste Zug nach Frankfurt fährt?"

In einer Ausführungsform besteht der angereicherte Datenstrom der Medienwiedergabe als Datentyp aus einer angereicherten Tonspur, einer angereicherten Videospur oder aus einer Kombination von angereicherter Tonspur und Videospur. Bevorzugt kann der ausgegebene Datentyp von dem Nutzer vorab gewählt werden. Dies führt insbesondere zu einer Datenreduktion, da beispielsweise eine Person mit einer Sehbehinderung keinen Mehrwert aus einer angereicherten Videospur ziehen kann. Der Datentyp kann also zielgerichtet auf eine Einschränkung des Nutzers und/oder im Hinblick auf eine Reduktion des Datenverkehrs angepasst werden.

Bevorzugt wird die angereicherte Tonspur neu erzeugt oder die Zusatzinformationen in den ursprünglichen Datenstrom, insbesondere in die ursprüngliche Tonspur, eingefügt.

Insbesondere bei der ursprünglichen Tonspur bietet das den Vorteil, dass keine ursprüngliche Information verloren geht. Es ist zudem möglich, die Zusatzinformationen in einer anderen Sprachmelodie, einer anderen Sprachstimme etc. wiederzugeben, sodass diese von dem Nutzer von der ursprünglichen Tonspur bzw. den ursprünglichen Audioelementen unterscheidbar sind.

Vorzugsweise werden im Fall der angereicherten Videospur oder im Fall der Kombination von angereicherter Tonspur und Videospur die Zusatzinformationen in den ursprünglichen Datenstrom eingefügt. Hierbei können die Zusatzinformationen beim Einfügen in den ursprünglichen Datenstrom mit dem ursprünglichen Datenstrom synchronisiert werden.

Die vorstehend beschriebene Analyse und die Erzeugung der Zusatzinformationen kann zu einer Latenz führen, die beispielsweise pro Sekunde einer Medienwiedergabe eine Latenz von 50 ms aufweist (wobei die Werte je nach Situation, Detailtiefe, Art der Anfrage an die generative AI etc. merklich voneinander abweichen können). Der entscheidende Punkt ist hierbei, dass diese beständige Latenz dazu führen kann, dass insbesondere bei einer längeren Medienwiedergabe die Zusatzinformationen ab einem bestimmten Zeit-Punkt so merklich zeitversetzt zu dem ursprünglichen Datenstrom eingefügt werden, dass dies für den Nutzer so störend ist, dass er diese Funktion deaktivieren wird und demnach auch nicht mehr von den entsprechenden Vorteilen profitieren kann. Eine Synchronisierung gleicht diesen Effekt aus oder vermindert ihn zumindest in einem Maße, dass er für den Nutzer nicht mehr als störend empfunden wird.

Eine Möglichkeit diese Synchronisierung vorzunehmen ist beispielsweise, dass der Algorithmus dem ursprünglichen Datenstrom, respektive den entsprechenden Audioelementen, in einer vordefinierten Auflösung Zeitstempel zuordnet. Den aus den entsprechenden Audioelementen generierten Wörtern kann der korrespondierende Zeitstempel ebenfalls zugeordnet werden als auch dem Output den die generative KI aus diesen Wörtern generiert. Dadurch wird bekannt, an welchen Stellen in dem ursprünglichen Datenstrom die Zusatzinformationen eingefügt werden müssen, um Synchronität zu erzeugen.

In einer bevorzugten Ausführungsform können folgende Synchronisierungsmaßnahmen und/oder Maßnahmen zur Reduzierung der Verarbeitungszeit zur Erzeugung von Zusatzinformationen, insbesondere implementiert als Algorithmus auf der Prozessoreinheit, angewendet werden:
- Puffern des ursprünglichen Datenstroms insbesondere in einem Zwischenspeicher; hierdurch kann eine Verzögerung erzeugt werden, dies ermöglicht den Zeitversatz beim Generieren der Zusatzinformationen zu kompensieren;
- Auslassen der Generierung der Zusatzinformationen für eine Zeitdauer bis Synchronität wiederhergestellt ist; diese Maßnahme kann der Algorithmus beispielsweise dann vornehmen, wenn er feststellt, dass die entsprechenden Zeitstempel über einem vorgegebenen Wert, beispielsweise von 50 ms, auseinanderlaufen. Insbesondere kann das Auslassen der Zusatzinformationen bei Audioelementen mit geringerer Priorität, insbesondere ab Prioritätsstufe 2, angewendet werden;
- Auswahl des Implementierungsortes des Zusatzinformationserzeugungs-Algorithmus; je nachdem, ob das Verfahren auf einem Server in einer Cloud-Umgebung oder auf dem Endgerät eines Nutzers implementiert ist, hat dies eine unterschiedliche Verzögerung bei der Erzeugung der Zusatzinformationen zur Folge. Im Allgemeinen dürfte die Rechnerleistung auf einem Server höher sein, aber es kann durch die Datenübertragung zu dem Endgerät auf dem der Nutzer die Medienwiedergabe wiedergibt zusätzlich zu Latenzeffekten kommen. Prinzipiell ist es eine Möglichkeit, um den optimalen Ort der Implementierung auszuwählen, eine Test-Messung mit den verschiedenen Implementierungsformen vorzunehmen, wobei die Test-Messung die Generierung von Zusatzinformationen aus dem ursprünglichen Datenstrom umfasst, und denjenigen Ort der Implementierung auszuwählen, der die geringere Latenz aufweist;
- Dynamische Anpassung der Wiedergabegeschwindigkeit des ursprünglichen Datenstroms; eine leichte Verzögerung der Wiedergabegeschwindigkeit des ursprünglichen Datenstroms wird von Nutzern gar nicht als störend wahrgenommen, wenn diese leichte Verzögerung dem Nutzer überhaupt auffällt. Beispielsweise kann der ursprüngliche Datenstrom mit einer Geschwindigkeit wiedergegeben werden, die nicht weniger als 90% der ursprünglichen Geschwindigkeit entspricht. Dies kann zudem dynamisch angepasst sein, sodass der Wert zwischen 90 % und 100 % variiert, da auch die Erzeugung der Zusatzinformationen nicht immer die gleiche Zeitdauer beanspruchen werden;
   und/oder
- Anpassung von Parametern der Erstellung der Zusatzinformationen; die Menge der Zusatzinformationen die bestimmt werden soll und/oder der Algorithmus, der die Zusatzinformationen bestimmt können unterschiedliche Latenzwerte hervorrufen. So könnte beispielsweise ein Algorithmus gewählt werden, der Zusatzinformationen schneller erzeugt, aber dadurch auf eine höhere Detailtiefe verzichtet.

Die verschiedenen Maßnahmen können insbesondere in beliebiger Form miteinander kombiniert werden, um eine Synchronität zwischen dem Einfügen der Zusatzinformationen und der ursprünglichen Medienwiedergabe zu erzeugen.

Vorzugsweise wird eine Farbe der Zusatzinformation in Textform beim Einfügen in den ursprünglichen Datenstrom verändert, sodass ein Kontrast entsteht, der die Lesbarkeit erhöht und/oder dass eine Lautstärke der Zusatzinformation als Ton beim Einfügen in den ursprünglichen Datenstrom erhöht wird, sodass die Zusatzinformation deutlich zu hören ist.

Wird beispielsweise ein schwarzer Text mit Zusatzinformationen vor einem schwarzen Hintergrund eingeblendet, wird der Nutzer nur wenig erkennen können. Insbesondere deshalb kann es auch vorteilhaft sein, Zusatzinformation in Textform als Display-Overlay einzublenden. Um beispielsweise die bestmögliche Position des Display-Overlays auf einem Bildschirm zu bestimmen, kann das Endgerät eine Webcam aufweisen oder mit einer Webcam verbunden sein, die die Augenbewegung des Nutzers nachverfolgen und auf diese Weise extrapolieren kann auf welche Stelle des Bildschirms der Nutzer blickt und gezielt an dieser Stelle das Display-Overlay einblenden.

Bei einem normalen Gespräch sollte das Signal-Rausch-Verhältnis (SNR) in der Regel etwa 10-15 Dezibel (dB) betragen, damit das Signal deutlich zu hören ist.

Das bedeutet, dass der Pegel der Zusatzinformationen als Ton (z. B. wenn jemand spricht) etwa 10-15 dB lauter sein sollte als der Pegel der Hintergrundgeräusche. Es ist jedoch zu beachten, dass der genaue erforderliche SNR-Wert von Faktoren wie dem individuellen Hörvermögen, dem Frequenzgehalt des Signals und der Art der Hintergrundgeräusche abhängen kann. So ist Sprache in ruhigen Umgebungen tendenziell besser verständlich als in lauten Umgebungen, so dass in lauten Umgebungen ein höherer SNR-Wert für eine klare Kommunikation erforderlich sein kann. In der Praxis bedeutet dies, dass bei einem relativ niedrigen Geräuschpegel, z. B. in einem ruhigen Raum, ein geringer dB-Unterschied von etwa 5 dB zwischen dem Signal und dem Rauschen für eine klare Kommunikation ausreichen kann. In lauteren Umgebungen mit mehr Hintergrundgeräuschen kann jedoch ein größerer Unterschied von etwa 20 dB erforderlich sein.

Bevorzugt wird der angereicherte Datenstrom der Medienwiedergabe auf dem Endgerät des Nutzers wiedergegeben. Das Endgerät eines Nutzers kann beispielsweise ein Smartphone, ein Computer, ein Tablet, ein Fernseher und/oder ein intelligenter Lautsprecher sein. Insbesondere kann auf dem Endgerät eine entsprechende App implementiert sein, die eingerichtet ist das Verfahren auszuführen und beispielsweise entsprechend nutzerspezifisch eingestellt werden kann.

Gemäß einem zweiten Aspekt der Erfindung ist eine Prozessoreinheit implementierbar auf einem Cloud-Server und/oder einem Nutzerendgerät angegeben, aufweisend
- eine erste Schnittstelle eingerichtet zum Empfangen eines ursprünglichen Datenstroms einer Medienwiedergabe, wobei die Medienwiedergabe eine ursprüngliche Videospur und/oder eine ursprüngliche Tonspur umfasst; die Prozessoreinheit ist insbesondere eingerichtet eine Tonspur und eine Videospur voneinander zu trennen;
- einen Zusatzinformationserzeugungs-Algorithmus implementiert auf der Prozessoreinheit eingerichtet zur Ausführung folgender Schritte in Kombination oder Einzeln:
   ∘ Hinsichtlich der Tonspur: Umwandeln der Sprache des Audiosignals der Tonspur in eine Basis-Textausgabe und Erzeugen von Tonspur-Zusatzinformationen basierend auf der Basis-Textausgabe und/oder dem Audiosignal;
      und/oder
   ∘ Hinsichtlich der Videospur: Durchführen einer Mustererkennung von Bildern, wodurch Objekte und/oder Objektbewegungen aus den Bildern und deren Wortbeschreibung extrahiert werden, wobei die Objekte und/oder Objektbewegungen als Input an eine generative KI übergeben werden mit der Aufgabe Videospur-Zusatzinformationen zu erzeugen;
   ∘ Erstellen eines angereicherten Datenstroms der Medienwiedergabe, wobei der angereicherte Datenstrom die Tonspur-Zusatzinformationen und/oder die Videospur-Zusatzinformationen umfasst, wobei der angereicherte Datenstrom auf einem Endgerät eines Nutzers darstellbar ist.

Die technischen Effekte und Vorteile sind analog zu denen, die in dem vorgeschriebenen Verfahren erzielt werden. Die Prozessoreinheit ist insbesondere eingerichtet die vorstehend beschriebenen Verfahrensschritte auszuführen.

Gemäß einem dritten Aspekt der Erfindung ist ein Computerprogrammprodukt auf einem Datenträger zur Durchführung der Schritte des vorstehend beschriebenen Verfahrens angegeben.

Die technischen Effekte und Vorteile sind analog zu denen, die in dem vorgeschriebenen Verfahren erzielt werden. Das Computerprogrammprodukt ist insbesondere eingerichtet die vorstehend beschriebenen Verfahrensschritte auszuführen.

Im Folgenden werden bevorzugte Ausführungsbeispiele der vorliegenden Erfindung unter Bezugnahme auf die begleitende Figur erläutert:

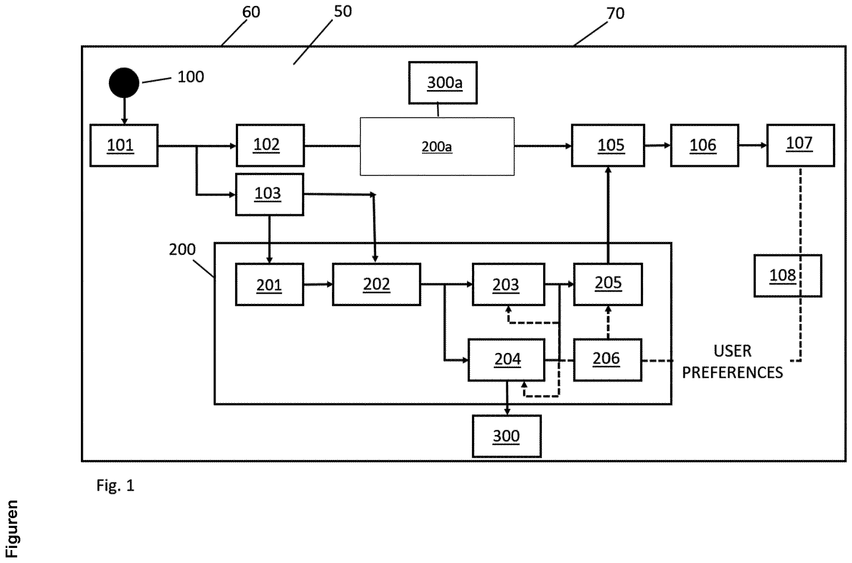

- Fig. 1:: den Ablauf gemäß einem Ausführungsbeispiel des erfindungsgemäßen Verfahrens.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

Fig. 1 zeigt den Ablauf gemäß einem Ausführungsbeispiel des erfindungsgemäßen Verfahrens 50 implementierbar als Zusatzinformationserzeugungs-Algorithmus 50, wobei der Zusatzinformationserzeugungs-Algorithmus 50 auf einer Prozessoreinheit 60 eines Nutzerendgeräts und/oder eines Servers implementierbar ist. In diesem Sinne zeigt Fig. 1 auch das entsprechende Computerprogrammprodukt 70 gemäß dem dritten Aspekt der Erfindung.

Schritt 100: ein Videostream 101 eines ursprünglichen Datenstroms einer Medienwiedergabe wird, beispielsweise von einem Videostreamanbieter, vermittels einer Schnittstelle von der Prozessoreinheit 60 empfangen, respektive an diese übertragen.

Zu Beginn kann der Videostream 101 in eine ursprüngliche Videospur 102 und eine ursprüngliche Tonspur 103 aufgeteilt werden. Die ursprüngliche Videospur 102 und die ursprüngliche Tonspur 103 können jeweils analysiert werden, um aus ihnen entsprechende Zusatzinformation zu generieren.

Im Fall der ursprünglichen Tonspur 103 werden die Zusatzinformationen von einer Tonspur-Zusatzinformation-Komponente 200 erzeugt. Es ist die Aufgabe der Tonspur-Zusatzinformation-Komponente 200 die ursprüngliche Tonspur 103 zu analysieren und die entsprechenden Zusatzinformationen einer angereicherten Darstellung der Medienwiedergabe hinzuzufügen.

Zunächst können mittels einer ASR Komponente 201 Audioelemente der ursprünglichen Tonspur 103 erkannt und in eine Basis-Textausgabe umgewandelt werden. Die Basis-Textausgabe ermöglicht es den nachfolgenden Analysekomponenten Analyseverfahren auf den "reinen Text" anzuwenden. Dieser Vorgang kann kontinuierlich erfolgen, sodass der Tonspur-Zusatzinformation-Komponente 200 eine kontinuierliche Tonspur 103 übermittelt wird. Hieraus ergibt sich auch die Anforderung, dass der gesamte Prozess in der Tonspur-Zusatzinformation-Komponente 200 bevorzugt eine so geringe Verarbeitungszeit wie nur möglich benötigt. Um eine geringe Verarbeitungszeit zu erreichen, können die folgenden Maßnahmen getroffen werden: i) Auslassen der Generierung der Zusatzinformationen für eine Zeitdauer bis Synchronität wiederhergestellt ist, ii) Auswahl des Implementierungsorts des Zusatzinformationserzeugungs-Algorithmus, und/oder iii) Anpassung von Parametern der Erstellung der Zusatzinformationen.

Nachdem die ursprüngliche Tonspur 103 in die Basis-Textausgabe umgewandelt wurde, wird ein Prioritätsunterscheidungs-Algorithmus 202 auf den Inhalt der Basis-Textausgabe angewendet, um verschiedenen Audioelementen, respektive den korrespondierenden Elementen der Basis-Textausgabe, verschiedene Prioritäten zuzuordnen. Für die Zuordnung kann der Prioritätsunterscheidungs-Algorithmus auch direkt die korrespondierenden Audioelemente verwenden. Dementsprechend können Inhalte, insbesondere die Basis-Textausgabe, wie folgt klassifiziert werden: Priorität 1) "Foreground Content" 203 als Inhalt, der beispielsweise im Vordergrund spielt, wie etwa Dialoge von Schauspielern und Priorität 2) "Background Content" 204 der Hintergrundgeräusche wie beispielsweise Musik, Vogelgezwitscher, etc. wiedergibt.

Eine Möglichkeit zur Unterscheidung zwischen den verschiedenen Prioritätsstufen kann mithilfe von frequenzbasierten Methoden vorgenommen werden, die einen Hintergrund und einen Vordergrund voneinander unterscheiden können. In vielen Fällen ist es nämlich der Fall, dass Vordergrund- und Hintergrundgeräusche unterschiedliche Frequenzbereiche abdecken. Frequenzbereichs-Verarbeitungstechniken wie etwa Bandpassfilterung oder spektrale Subtraktion können verwendet werden, um spezifische Frequenzkomponenten zu isolieren. Beispielsweise sind Hintergrundgeräusche in der Regel leiser als Vordergrund Geräusche. Insbesondere bei modernen Medieninhalten bei denen die Tonspur als Mehrkanaltonsystem bereitgestellt wird, ist es einfach möglich die Hintergrund- und Vordergrundgeräusche aus den speziellen Audiokanälen abzugreifen. Hierbei ist es insbesondere möglich, dass die Zusatzinformationen anhand von Nutzervoreinstellungen 206 (die beispielsweise in einer App vorgenommen werden können) festgelegt oder zumindest beeinflusst werden.

Der Zusatzinformationserzeugungs-Algorithmus 50 (insbesondere eine entsprechende Komponente die für den Background Content" 204 zuständig ist) kann anhand der Nutzereinstellungen beispielsweise Vogelgezwitscher unterscheiden. Einerseits kann hierdurch eine sehr einfache Zusatzinformation wie beispielsweise "Vogelgezwitscher im Hintergrund" erzeugt werden oder den Nutzer kann in seinen Einstellungen spezifizieren, dass das Gezwitscher als kurze Melodie dargestellt wird "Di-Du-II-Da". Um diese Zusatzinformationen als Tonspur-Zusatzinformationen und/oder Videospur-Zusatzinformationen zu erzeugen, kann der Zusatzinformationserzeugungs-Algorithmus 50 auch durch entsprechend konfigurierte Schnittstellen auf externe Datenbanken 300 zurückgreifen, die weitergehende Informationen bereithalten. Wie im vorherigen Beispiel könnte ein Vogelgezwitscher als Melodie dargestellt werden, weiterhin könnten Fan-Gesänge bei einem Fußballspiel ebenfalls erkannt und vermittels Untertiteln dargestellt werden. Ein lautes Buhen der Zuschauer oder ein Applaudieren können von der entsprechenden Komponente, die für den "Background Content" 204 zuständig ist, in einen Kontext der aktuellen Szene gesetzt werden und zum Beispiel als Zusatzinformation "Fußballspieler-Meyer wird ausgebuht, weil er eben eine rote Karte wegen Schauspielerei bekommen hat."

Der Zusatzinformationserzeugungs-Algorithmus 50 (insbesondere eine entsprechende Komponente die für den "Foreground Content" 203 zuständig ist) kann ebenfalls die Nutzereinstellungen 206 berücksichtigen und hierauf basierend Zusatzinformationen erstellen. Ein Beispiel hierfür ist, dass das gesprochene Wort eines Dialogs nicht einfach wie in Form der bekannten, herkömmlichen Untertiteln 1:1 wiedergegeben wird, sondern Zusatzinformation eingefügt werden, die beispielsweise Emotionen oder Eigenschaften der Sprache beschreiben "Stopp! Schrie Hugo aus voller Seele". Oder es ist möglich einen bayerischen Akzent in eine hochdeutsche Schreibweise zu übersetzen, Definitionen einzublenden, ein Interaktionsmenü aufzurufen, etc.

Der Zusatzinformationserzeugungs-Algorithmus 50 leitet die entsprechenden Zusatzinformationen an eine Anreicherungs-Komponente 205 weiter. Die Anreicherungs-Komponente 205 ist eingerichtet zu entscheiden, welche Zusatzinformationen dem Nutzer dargestellt werden. Insbesondere entscheidet die Anreicherungs-Komponente 205 ebenfalls, wie die Darstellung erfolgen soll. Für diese Entscheidung können ebenfalls die Nutzereinstellungen 206 berücksichtigt werden. Ein Nutzer kann entscheiden, ob er beispielsweise Zusatzinformationen separat in einem Overlay dargestellt haben möchte oder ob diese in Untertitel eingearbeitet werden sollen und/oder in die Tonspur integriert werden sollen. Im Fall des "Foreground Content" 203 kann der Inhalt beispielsweise durch einen Avatar in Zeichensprache wiedergegeben werden. Emotionen von Schauspielern können dadurch dargestellt werden, dass eine Textfarbe der Wörter geändert wird.

Das erfindungsgemäße Verfahren ermöglicht es zudem die Zusatzinformationen als Steuersignale an andere Geräte weiterzugeben, so kann beispielsweise ein "Force Feedback Sessel" angesteuert werden, um bei bestimmten Inhalten zu vibrieren und dem Nutzer ein zusätzliches Erlebnis zu ermöglichen.

Im Fall der ursprünglichen Videospur 103 werden die Zusatzinformationen von einer Videospur-Zusatzinformation-Komponente 200a erzeugt. Zunächst kann eine Mustererkennung von Bildern durchgeführt werden, wodurch Objekte und/oder Objektbewegungen aus den Bildern erkannt und deren Wortbeschreibung extrahiert werden, wobei die Objekte und/oder Objektbewegungen als Input an eine generative Kl 300a übergeben werden mit der Aufgabe Videospur-Zusatzinformationen zu erzeugen. Als Beispiel kann die Mustererkennung die drei folgenden Begriffe: Katze, Baum und Feuerwehr erkennen.

An die generative KI 300a kann dann folgende Aufgabe übergeben werden:" Schreib mir eine Geschichte, basierend auf den 3 folgenden begriffen: Katze, Baum und Feuerwehr."

### KI:

"Es war einmal eine kleine Stadt, die von einem dichten Wald umgeben war. Inmitten dieses Waldes stand ein großer alter Baum, dessen ausladende Äste sich weit über das umliegende Land erstreckten. Dieser Baum war nicht nur ein markantes Wahrzeichen der Stadt, sondern auch ein beliebter Treffpunkt für die Bewohner.

Eines Tages entdeckte eine neugierige Katze namens Whiskers den Baum und beschloss, ihn zu erkunden. Sie kletterte geschickt auf die Äste und genoss die Aussicht von oben. Doch plötzlich bemerkte sie Rauch, der aus der Ferne aufstieg. Whiskers zögerte nicht lange und eilte hinunter, um die anderen Tiere in der Stadt zu warnen.

Die Tiere versammelten sich besorgt am Fuße des Baumes und erkannten, dass ein Feuer im Wald ausgebrochen war. Panik breitete sich aus, als die Flammen näher kamen und der Rauch dichter wurde. In ihrer Verzweiflung riefen die Tiere nach Hilfe, und bald darauf hörten sie das Martinshorn der Feuerwehr.

Die tapferen Feuerwehrleute der Stadt, angeführt von Hauptfeuerwehrmann Tom, eilten herbei, um den Brand zu bekämpfen. Doch der Zugang zum Feuer war schwierig, da das Gelände unwegsam war und die Flammen sich schnell ausbreiteten. Tom erkannte, dass sie eine neue Strategie brauchten, um das Feuer unter Kontrolle zu bringen.

Plötzlich hatte Whiskers eine Idee. Sie erinnerte sich an die ausladenden Äste des großen Baumes und schlug vor, eine Feuerschneise zu schaffen, indem sie die umliegenden Bäume abschnitt, um das Feuer einzudämmen. Die Feuerwehrleute waren skeptisch, aber sie hatten nicht viel zu verlieren, also beschlossen sie, es zu versuchen.

Mit vereinten Kräften begannen die Feuerwehrleute und die Tiere, die Bäume zu fällen und eine Barriere zu errichten. Die Hitze war intensiv, und die Flammen bedrohlich, aber sie gaben nicht auf. Schließlich gelang es ihnen, das Feuer einzudämmen und zu löschen.

Die Bewohner der Stadt jubelten vor Erleichterung, als die Gefahr vorüber war. Whiskers wurde als Heldin gefeiert, und Hauptfeuerwehrmann Tom lobte ihre Entschlossenheit und Kreativität. Von diesem Tag an wurde der große Baum nicht nur als Treffpunkt, sondern auch als Symbol für die Zusammenarbeit und den Mut der Bewohner der Stadt angesehen.

Und so lebten sie glücklich und sicher in ihrer kleinen Stadt, in der die Katze, der Baum und die Feuerwehr gemeinsam eine unvergessliche Geschichte geschrieben hatten."

Diese Videospur-Zusatzinformationen können als Sprache und/oder als Text ausgegeben werden. Dem Fachmann sind Module bekannt, die einen Text in Sprache umwandeln können.

Die so erzeugten Zusatzinformationen können als Augmented Video 105 an das Nutzerendgerät übermittelt bzw. wenn der Algorithmus auf dem Nutzerendgerät 106 implementiert ist von diesem erzeugt und dargestellt werden, sodass der Nutzer 107 die Zusatzinformationen wahrnehmen kann. Der Nutzer 107 hat mithilfe eines Feedback-Modus 108 die Möglichkeit Einstellungen anzupassen. Dies kann so implementiert sein, dass das Drücken der Volumentaste bei einer Fernbedienung nicht mehr dazu führt, dass die Lautstärke verändert wird, sondern dass ein Detail-Level der Zusatzinhalte verändert wird oder es kann festgelegt werden, welche Grundeinstellungen der Nutzer 107 aufgrund seiner Beeinträchtigung bevorzugt, beispielsweise keine Beschreibung der Hintergrundgeräusche oder keine zusätzlichen Hintergrundinformationen aus externen Quellen 300, 300a.

## Patentansprüche

1. Verfahren zum dynamischen Bereitstellen von Zusatzinformationen bei einer Medienwiedergabe umfassend die folgenden Schritte:
• Empfangen eines ursprünglichen Datenstroms einer Medienwiedergabe, wobei die Medienwiedergabe eine ursprüngliche Videospur und/oder eine ursprüngliche Tonspur umfasst;
• Übergabe des Datenstroms an eine Prozessoreinheit, wobei ein Zusatzinformationserzeugungs-Algorithmus implementiert auf der Prozessoreinheit folgende Schritte in Kombination oder Einzeln ausführt:
∘ Hinsichtlich der Tonspur: Umwandeln der Sprache des Audiosignals der Tonspur in eine Basis-Textausgabe und Erzeugen von Tonspur-Zusatzinformationen basierend auf der Basis-Textausgabe und/oder dem Audiosignal;
und/oder
∘ Hinsichtlich der Videospur: Durchführen einer Mustererkennung von Bildern, wodurch Objekte und/oder Objektbewegungen aus den Bildern erkannt und deren Wortbeschreibung extrahiert werden, wobei die Objekte und/oder Objektbewegungen als Input an eine generative KI übergeben werden mit der Aufgabe Videospur-Zusatzinformationen zu erzeugen;
∘ Erstellen eines angereicherten Datenstroms der Medienwiedergabe, wobei der angereicherte Datenstrom die Tonspur-Zusatzinformationen und/oder der Videospur-Zusatzinformationen umfasst, wobei der angereicherte Datenstrom auf einem Endgerät eines Nutzers darstellbar ist.

2. Verfahren nach Anspruch 1, **dadurch gekennzeichnet, dass** zur Erzeugung der Tonspur-Zusatzinformationen die Basis-Textausgabe einer generativen KI übergeben wird mit der Aufgabenstellung Zusatzinformationen zu erzeugen.

3. Verfahren nach einem der vorhergehenden Ansprüche, **dadurch gekennzeichnet, dass** die Prozessoreinheit einen Prioritätsunterscheidungs-Algorithmus umfasst, wobei der Prioritätsunterscheidungs-Algorithmus Audioelementen des Audiosignals der Tonspur zumindest zwei verschiedene Prioritäten zuordnet.

4. Verfahren nach Anspruch 3, **dadurch gekennzeichnet, dass** der Prioritätsunterscheidungs-Algorithmus auf Grundlage der folgenden Kriterien diese Zuordnung trifft:
• Übereinstimmung des Audioelements mit Sprache,
• Lautstärke des Audioelements, und/oder
• Frequenzeigenschaften des Audioelements.

5. Verfahren nach einem der Ansprüche 3 bis 4, **dadurch gekennzeichnet, dass** die Erstellung der Tonspur-Zusatzinformationen in Abhängigkeit von der Priorität durchgeführt wird.

6. Verfahren nach einem der vorhergehenden Ansprüche, **dadurch gekennzeichnet, dass** externe Datenbanken zur Erstellung der Zusatzinformationen angefragt werden.

7. Verfahren nach einem der vorhergehenden Ansprüche, **dadurch gekennzeichnet, dass** der angereicherte Datenstrom der Medienwiedergabe aus einer angereicherten Tonspur, einer angereicherten Videospur oder aus einer Kombination von angereicherter Tonspur und Videospur besteht.

8. Verfahren nach Anspruch 7, **dadurch gekennzeichnet, dass** die angereicherte Tonspur neu erzeugt oder dass die Zusatzinformationen in den ursprünglichen Datenstrom, insbesondere in die ursprüngliche Tonspur, eingefügt werden.

9. Verfahren nach einem der Ansprüche 7 bis 8, **dadurch gekennzeichnet, dass** im Fall der angereicherten Videospur oder im Fall der Kombination von angereicherter Tonspur und Videospur die Zusatzinformationen in den ursprünglichen Datenstrom eingefügt werden.

10. Verfahren nach einem der Ansprüche 8 bis 9, **dadurch gekennzeichnet, dass** die Zusatzinformationen beim Einfügen in den ursprünglichen Datenstrom mit dem ursprünglichen Datenstrom synchronisiert werden.

11. Verfahren nach Anspruch 10, wobei folgende Synchronisierungsmaßnahmen angewendet werden:
• Puffern des ursprünglichen Datenstroms,
• Auslassen der Generierung der Zusatzinformationen für eine Zeitdauer bis Synchronität wiederhergestellt ist,
• Auswahl des Implementierungsortes des Zusatzinformationserzeugungs-Algorithmus,
• Dynamische Anpassung der Wiedergabegeschwindigkeit des ursprünglichen Datenstroms, und/oder
• Anpassung von Parametern der Erstellung der Zusatzinformationen.

12. Verfahren nach einem der vorhergehenden Ansprüche, **dadurch gekennzeichnet, dass** eine Farbe der Zusatzinformation als Text beim Einfügen in den ursprünglichen Datenstrom verändert wird, sodass ein Kontrast entsteht, der die Lesbarkeit erhöht und/oder dass eine Lautstärke der Zusatzinformation als Ton beim Einfügen in den ursprünglichen Datenstrom erhöht wird, sodass die Zusatzinformation deutlich zu hören ist.

13. Verfahren nach einem der vorhergehenden Ansprüche, **dadurch gekennzeichnet, dass** der angereicherte Datenstrom der Medienwiedergabe auf dem Endgerät des Nutzers wiedergegeben wird.

14. Prozessoreinheit implementierbar auf einem Cloud-Server und/oder einem Nutzerendgerät aufweisend
• eine erste Schnittstelle eingerichtet zum Empfangen eines ursprünglichen Datenstroms einer Medienwiedergabe, wobei die Medienwiedergabe eine ursprüngliche Videospur und/oder eine ursprüngliche Tonspur umfasst;
• einen Zusatzinformationserzeugungs-Algorithmus implementiert auf der Prozessoreinheit eingerichtet zur Ausführung folgender Schritte in Kombination oder Einzeln:
∘ Hinsichtlich der Tonspur: Umwandeln der Sprache des Audiosignals der Tonspur in eine Basis-Textausgabe und Erzeugen von Tonspur-Zusatzinformationen basierend auf der Basis-Textausgabe und/oder dem Audiosignal;
und/oder
∘ Hinsichtlich der Videospur: Durchführen einer Mustererkennung von Bildern, wodurch Objekte und/oder Objektbewegungen aus den Bildern und deren Wortbeschreibung extrahiert werden, wobei die Objekte und/oder Objektbewegungen als Input an eine generative KI übergeben werden mit der Aufgabe Videospur-Zusatzinformationen zu erzeugen;
∘ Erstellen eines angereicherten Datenstroms der Medienwiedergabe, wobei der angereicherte Datenstrom die Tonspur-Zusatzinformationen und/oder der Videospur-Zusatzinformationen umfasst, wobei der angereicherte Datenstrom auf einem Endgerät eines Nutzers darstellbar ist.

15. Computerprogrammprodukt auf einem Datenträger zur Durchführung des Verfahrens nach einem der Ansprüche 1 bis 13.
